# EUROPEAN PATENT SPECIFICATION

(11) **EP 3 928 621 B1**
(45) Date of publication and mention of the grant of the patent: **02.08.2023**
(21) Application number: 21180793.8
(22) Date of filing: 22.06.2021
(51) Int. Cl.: A21C 9/04

(54) **A DOSING APPARATUS FOR DOSING DISCRETE SOLID INGREDIENTS ON FOOD PRODUCTS AND FOOD PRODUCTS PRODUCTION PLANT**
DOSIERVORRICHTUNG ZUM DOSIEREN DISKRETER FESTER INHALTSSTOFFE VON NAHRUNGSMITTELN UND PRODUKTIONSANLAGE FÜR LEBENSMITTEL
APPAREIL DE DOSAGE POUR DOSER DES INGRÉDIENTS SOLIDES DISCRETS SUR DES PRODUITS ALIMENTAIRES ET INSTALLATION DE PRODUCTION DE PRODUITS ALIMENTAIRES

(30) Priority: 26.06.2020 IT 202000015496
(43) Date of publication of application: 29.12.2021
(73) Proprietor: Dreamfood S.r.l., 41126 Modena (IT)
(72) Inventor: Barbieri, Marco, 41058 VIGNOLA (MODENA) (IT)
(74) Representative: Monelli, Alberto

(56) References cited:
- EP-A1- 1 188 379
- US-A- 4 197 794
- US-A1- 2015 047 557

## Description

The present invention relates to a dosing apparatus for dosing discrete solid ingredients on food products and a food products production plant.

In particular, the present invention can be applied in the sector of pizza production at industrial level. Specifically, the present invention can be applied in the step of topping pizzas, before baking, wherein a plurality of predefined ingredients are deposited onto the pizza.

Dosing units for dosing ingredients are known, wherein the ingredients are distributed from above onto a belt conveying the pizzas to be topped. Such dosing units are also known as "rain" dosing units. The ingredients to which reference is made herein are discrete solid ingredients.

US 2015/047557 A1 discloses a dosing unit for food products with high-moisture content.

In this context, a solution of the known type consists of a sliding belt above which a plurality of rods are arranged rotating about a common central axis. Such rods are provided with vertical teeth arranged in a row and equally spaced. Thanks to the fact that the rods rotate, successive rows of teeth are located facing the belt and thus the product is dosed, which then falls from the belt onto a conveyor belt on which the pizzas to be topped are moving. In particular, the longitudinal extension of the row of teeth defines a width of the belt along which the ingredients are distributed. Therefore, this affects the distribution of the ingredients on the pizzas such as, for example, cheese, meat, vegetables and the like.

Such known solution has the main disadvantage that the length of the row of teeth is predefined. This means that the dosing unit can be used jointly with a pizza conveyor belt having a very precise width. Otherwise, the dosing of the ingredients on the pizzas would be inefficient. Therefore, it is not possible to use such a dosing unit in the case in which the transverse dimension of the belt is changed in order to change the hourly production of pizzas.

In this context, the technical task underpinning the present invention is that of proposing a dosing apparatus for dosing discrete solid ingredients, which obviates the drawbacks of the prior art cited above.

In particular, the object of the present invention is to propose a dosing apparatus for dosing discrete solid ingredients, which can be adapted to different belt lengths.

Another object of the present invention is to make available a dosing apparatus for dosing discrete solid ingredients, which enables optimal dosing of the ingredients according to the type of ingredient used.

The stated technical objective and the specified aims are substantially attained by a dosing apparatus for dosing discrete solid ingredients, comprising the technical characteristics set forth in one or more of the appended claims.

Further characteristics and advantages of the present invention will more fully emerge from the non-limiting description of a preferred but not exclusive embodiment of a dosing apparatus for dosing discrete solid ingredients, as illustrated in the accompanying drawings, in which:

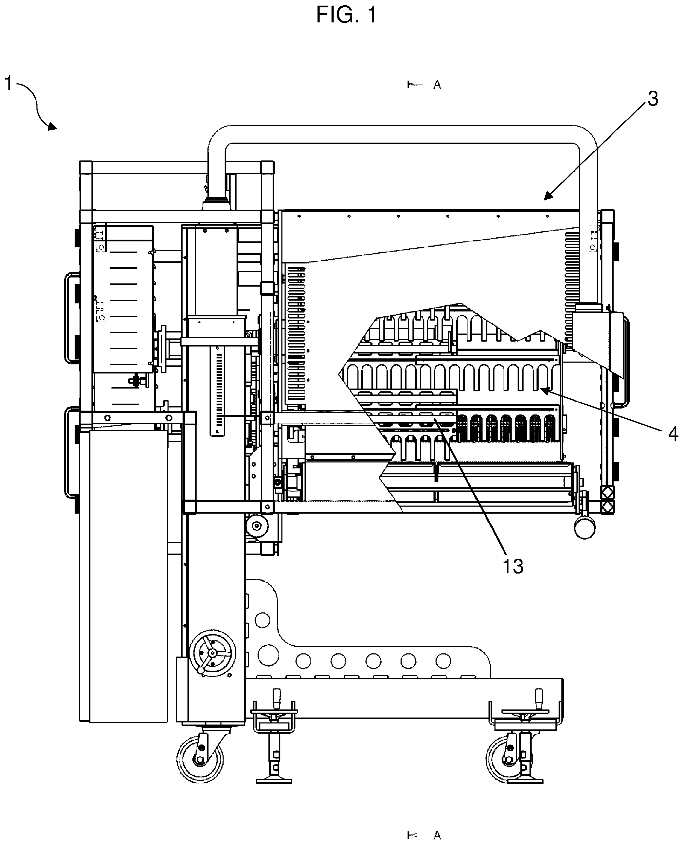

- figure 1 illustrates a dosing apparatus for dosing discrete solid ingredients, according to the present invention, in a front view;

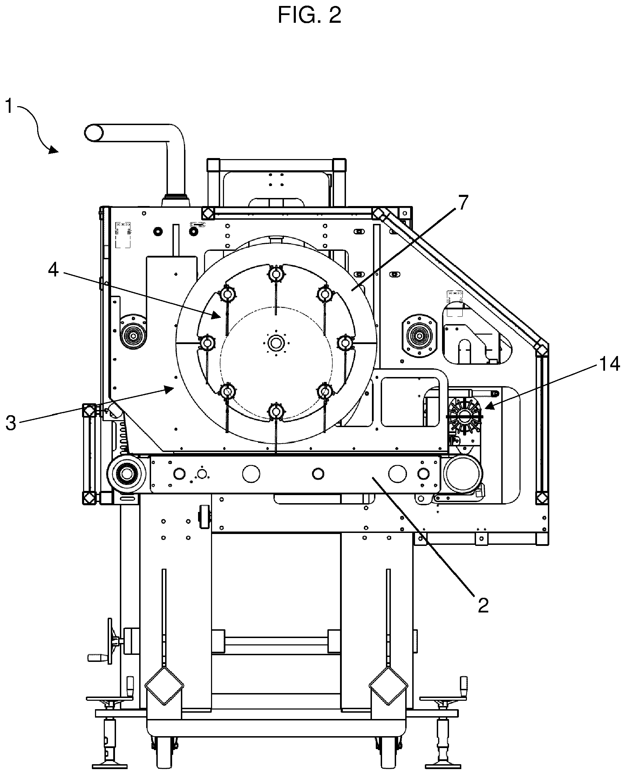

- figure 2 illustrates a sectional view of the apparatus of figure 1, along the line A-A;

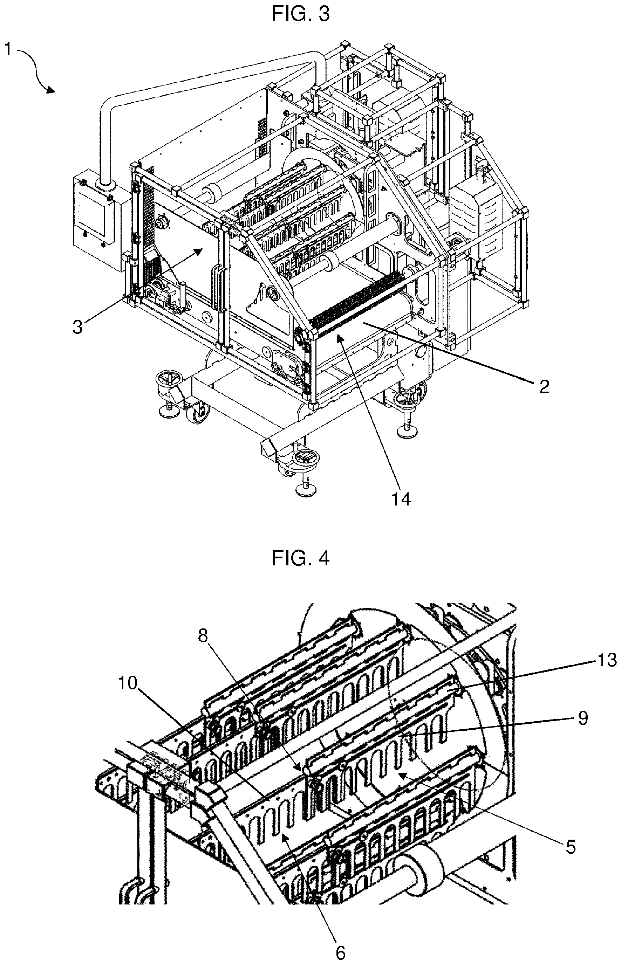

- figure 3 illustrates a perspective view of the apparatus of figure 1;
- figure 4 illustrates a detail (first row and second row of teeth) of the apparatus of figure 3;

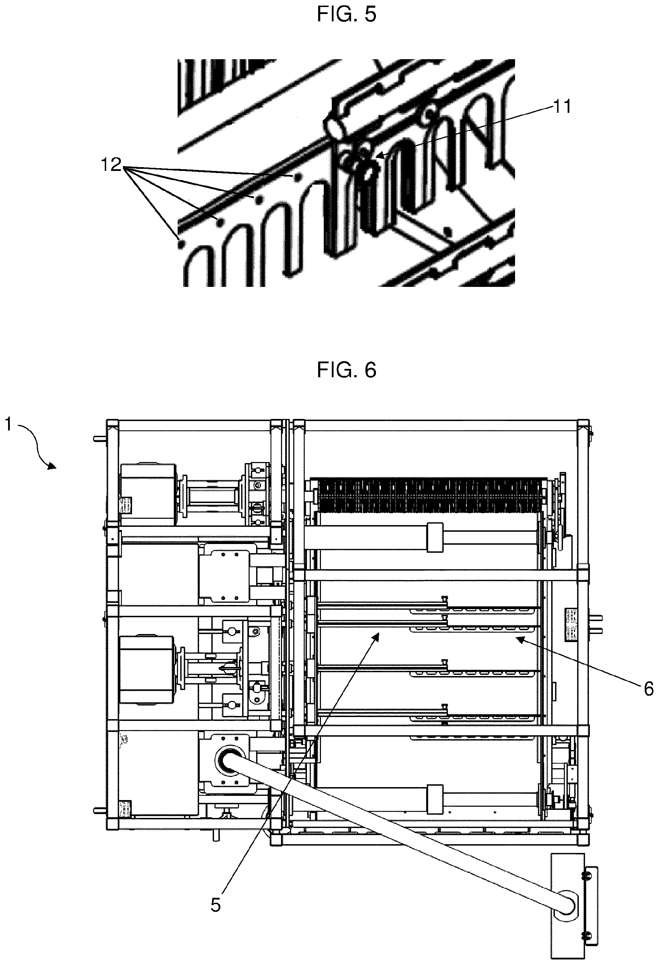

- figure 5 illustrates a detail (locking element and holes) of the apparatus of figure 3.
- figure 6 illustrates a view from above of the apparatus of figure 1.

With reference to the figures, the number 1 indicates a dosing apparatus for dosing discrete solid ingredients (also food products) on food products. In particular, the dosing apparatus 1 adjusts the dosing and distribution of the ingredients intended to be placed on the food products, in particular pizzas.

The dosing apparatus 1 comprises a conveyor belt 2 for the ingredients destined to discharge said ingredients on the food products.

Preferably, the belt 2 extends in length between an upstream end and a downstream end according to a conveying direction of food products (in particular pizzas). The width of the belt 2 is defined by a substantially orthogonal direction to the conveying direction.

A distributor 3 of ingredients is arranged above the conveyor belt 2. The distributor comprises a first and a second row 5, 6 of teeth 4 developing above the belt 2 in parallel to a crossing direction of the belt 2.

Preferably, the crossing direction of the belt 2 is substantially orthogonal to the conveying direction. In other words, the first and the second row 5, 6 have an extension according to the width of the belt 2.

The first and the second row 5, 6 are movable along a closed trajectory towards/away from the belt 2.

Preferably, the first and the second row 5, 6 of teeth 4 follow a closed curvilinear trajectory. In particular, the curvilinear trajectory comprises a lower section such that the first and the second row 5, 6 are located at the belt 2.

In the embodiment described and illustrated herein, the distributor 3 comprises a plurality of first and second rows 5, 6 of teeth 4 having an extension according to a plurality of crossing directions of the belt 2 parallel to each another.

Preferably, the teeth 4 are maintained vertical throughout the entire trajectory.

In the embodiment described and illustrated herein, the rows of teeth 4 are connected at one side to a disk 7 rotating about a rotation axis. Preferably, the rotation axis of the disk 7 is substantially parallel to the width of the belt 2.

Preferably, the distributor 3 rotates in the opposite direction with respect to the advancement direction of the belt 2.

Preferably, the plurality of first and second rows 5, 6 of teeth 4 are circumferentially equally spaced.

Preferably, each row of teeth 4 has a substantially prevalent longitudinal extension. Preferably, the row of teeth 4 extends away from the disk 7 according to a substantially parallel direction to the width of the belt 2. Originally, the first and the second row 5, 6 of teeth 4 are substantially parallel to each another and sliding relative to each other.

In the embodiment described and illustrated herein, the second row 6 slides with respect to the first row 5 along a substantially parallel direction to the width of the belt 2. In this way, it is possible to adjust the transverse dimensions of the rows of teeth 5, 6 on the belt 2.

According to the present invention the second row 6 is sliding between a first limit position, wherein the first and the second row 5, 6 are at least partially overlapping, and a second limit position, wherein the first and the second row 5, 6 are at least partially placed side by side along the crossing direction.

Preferably, the first row 5 and the second row 6 have a substantially equal length so that, in the second limit position, they constitute a substantially double dimension with respect to the first limit position.

In particular, in the second limit position the second row 6 of teeth 4 defines a longitudinal extension of the first row 5 of teeth 4.

Preferably, the dosing apparatus 1 comprises stopping means 8 configurable at least in an engaging position, wherein they prevent the relative sliding between the first and the second row 5, 6, and a rest position, wherein they allow the relative sliding between the first and the second row 5, 6.

In the embodiment described and illustrated herein, the first row 5 is connected at one end to the disk 4. The second row 6 is slidably coupled to the first row 5.

Preferably, the first and the second row 5, 6 are each made in one piece. In other words, the first and the second row 5, 6 are realized respectively on a first and a second support 9, 10. The stopping means 8 comprise a locking element 11 engageable in corresponding housings 12 realized on the two rows 5, 6 of teeth 4.

In the embodiment described and illustrated herein, the housings 12 are holes. In particular, a plurality of holes is realized on the second row 6 of teeth. On the first row 5 a hole is afforded which is coupled with one of the holes of the second row 6. Preferably, the hole of the first row 5 is arranged at the longitudinal end opposite the one connected to the disk 7. The plurality of holes of the second row 6 defines a plurality of discrete reciprocal positions that the first and the second row 5, 6 can take on. Preferably, in an intermediate reciprocal position between the two limit positions, at least a part of the teeth 4 of the first row 5 is substantially overlapped to a part of the teeth 4 of the second row 6.

Preferably, the holes are realized above the teeth 4.

In the embodiment described and illustrated herein, the distributor 3 comprises a rod 13 having a parallel extension to the crossing direction of the belt 2. The rod 13 supports the first row 5 of teeth 4.

Preferably, at one end the rod 13 is connected to the disk 7, whereas the opposite end is free.

Preferably, the first row 5 of teeth 4 is hanging from the rod 13.

In the embodiment described and illustrated herein, the distributor 3 comprises a plurality of rods 13, each rod 13 supporting a first row 5 of teeth 4.

Preferably, the dosing apparatus 1 comprises guiding means (not illustrated) on which the second row 6 is slidingly mounted.

Preferably, the dosing apparatus 1 comprises a dosing roller 14 for dosing the ingredients which are on the conveyor belt 2. Preferably, the roller 14 is provided with a plurality of protuberances. Preferably, the protuberances are arranged in longitudinal rows and have a substantially radial extension. The roller 14 is arranged at one end of the belt 2. In particular, it is arranged at the downstream end of the belt 2 along the conveying direction. The roller 14 extends main along a substantially parallel direction to the width of the belt 2.

In the embodiment described and illustrated herein, the roller 14 rotates about a rotation axis substantially parallel to the width of the belt 2. Preferably, the rotation axis of the roller 14, the rotation axis of the disk 7 and the width of the belt 2 are substantially parallel.

Preferably, the roller 14 rotates in the same or opposite direction with respect to the advancement direction of the belt 2.

Preferably, the roller 14 is adjustable in height, i.e. the distance of the roller 14 from the belt 2 is variable.

Preferably, the inclination of the roller 14 with respect to the belt 2 is adjustable.

In this way, according to the type of ingredients used, it is possible to adjust the height and inclination of the roller 14 to guarantee an optimal distribution.

Preferably, the dosing apparatus 1 is a trolley apparatus in order to be moved on a support surface.

Preferably, the dosing apparatus 1 comprises a dispenser for dispensing the ingredients on the conveyor belt 2.

A food products production plant, according to the present invention, is described below.

The production plant comprises a feeding line of the food products (not illustrated) and a dosing apparatus 1 according to what is described above.

The conveyor belt 2 is on top of at least a part of the feeding line and, at an end thereof, determines the fall of the ingredients on said feeding line. From the description given, the features of the dosing apparatus for dosing discrete solid ingredients according to the present invention appear clear, as do the advantages thereof.

In particular, the fact of providing two rows of teeth coupled and sliding relative to each other enables the width of the belt affected by the action of the teeth to be changed. Therefore, the dosing apparatus can be used in combination with a conveyor belt of pizzas of various formats, in particular of various widths. This also enables the hourly production of the individual industrial production line for pizzas to be changed.

## Claims

1. A dosing apparatus (1) for dosing discrete solid ingredients on food products, comprising:
- a conveyor belt (2) for the ingredients destined to discharge said ingredients on the food products;
- a distributor (3) of said ingredients arranged above the conveyor belt (2), said distributor (3) comprising a first and a second row (5, 6) of teeth (4) developing above the conveyor belt (2) in parallel to a crossing direction of the conveyor belt (2); said first and second row (5, 6) of teeth (4) being movable along a closed trajectory towards/away from the conveyor belt (2),
**characterized in that** the first and the second row (5, 6) of teeth (4) are substantially parallel to each other and sliding relative to each other;
the second row (5) of teeth (4) is sliding with respect to the first row (5) of teeth (4) between a first limit position, wherein the first and the second row (5, 6) are at least partially overlapping, and a second limit position, wherein the first and the second row (5, 6) are at least partially placed side by side along said crossing direction of the conveyor belt (2).

2. The dosing apparatus (1) according to claim 1, comprising stopping means (8) configurable at least in an engaging position, wherein they prevent the relative sliding between the first and the second row (5, 6), and a rest position, wherein they allow the relative sliding between the first and the second row (5, 6).

3. The dosing apparatus (1) according to claim 2, wherein the first and the second row (5, 6) are each made in one piece, said stopping mean (8) comprising a locking element (11) engageable in corresponding housings realized on the first and the second row (5, 6).

4. The dosing apparatus (1) according to claim 3, wherein said housings (12) are holes, said second row (6) of teeth (4) having a plurality of holes (12) so as to define a plurality of discrete reciprocal positions that the first and the second row (5, 6) can take on.

5. The dosing apparatus (1) according to any one of the preceding claims, wherein, in an intermediate reciprocal position between the first and the second limit positions, at least a part of the teeth (4) of the first row (5) is substantially overlapped to a part of the teeth (4) of the second row (6).

6. The dosing apparatus (1) according to any one of the preceding claims, comprising a disk (7) rotating around a rotation axis, the first and the second row (5, 6) being connected to the disk (7) in such a way to move along said closed trajectory.

7. The dosing apparatus (1) according to any one of the preceding claims, wherein said distributor (3) comprises a rod (13) developing above the conveyor belt (2) parallel to said crossing direction, said rod (13) supporting the first row (5) of teeth (4).

8. The dosing apparatus (1) according to any one of the preceding claims, comprising guiding means on which the second row (6) is slidingly mounted with respect to the first row (5).

9. The dosing apparatus (1) according to any one of the preceding claims, comprising a rotating roller (14) for dosing the ingredients which are on said conveyor belt (2); said roller (14) being arranged at a downstream end of the conveyor belt (2), said roller (14) being adjustable in height in such a way to vary its distance from the conveyor belt (2).

10. The dosing apparatus (1) according to any one of the preceding claims, in which the crossing direction of the belt (2) is substantially orthogonal to a conveying direction; the first and the second row (5, 6) having an extension according to the width of the belt (2).

11. The dosing apparatus (1) according to claim 10 wherein the second row (6) slides with respect to the first row (5) along a substantially parallel direction to the width of the belt (2).

12. The dosing apparatus (1) according to any one of the preceding claims, wherein in the second limit position the second row (6) of teeth (4) defines a longitudinal extension of the first row (5) of teeth (4).

13. Food products production plant, comprising:
- a feeding line of the food products;
- a dosing apparatus (1) according to any one of claims 1 to 12, said conveyor belt (2) being on top of the feeding line and, at its own end, determining the fall of the ingredients on said feeding line.

## Patentansprüche

1. Dosiervorrichtung (1) zum Dosieren diskreter fester Inhaltsstoffe auf Nahrungsmittel, umfassend:
- ein Förderband (2) für die Inhaltsstoffe, das dazu bestimmt ist, diese Inhaltsstoffe auf den Nahrungsmitteln abzuladen;
- einen Verteiler (3) der Inhaltsstoffe, der über dem Förderband (2) angeordnet ist, wobei der Verteiler (3) eine erste und eine zweite Reihe (5, 6) von Zähnen (4) umfasst, die sich über dem Förderband (2) parallel zu einer Querungsrichtung des Förderbands (2) entwickeln, wobei die erste und die zweite Reihe (5, 6) von Zähnen (4) entlang einer geschlossenen Bahn hinführend zum Förderband (2) und wegführend davon bewegbar sind,
**dadurch gekennzeichnet, dass** die erste und die zweite Reihe (5, 6) von Zähnen (4) im Wesentlichen parallel zueinander angeordnet sind und relativ zueinander verschoben werden,
wobei die zweite Reihe (5) von Zähnen (4) in Bezug auf die erste Reihe (5) von Zähnen (4) zwischen einer ersten Grenzposition, in der sich die erste und die zweite Reihe (5, 6) mindestens teilweise überlappen, und einer zweiten Grenzposition, in der die erste und die zweite Reihe (5, 6) mindestens teilweise entlang der Querungsrichtung des Förderbands (2) nebeneinander platziert sind, verschoben werden.

2. Dosiervorrichtung (1) nach Anspruch 1, umfassend Stoppmittel (8), die zumindest in einer Eingriffsposition, in der sie das relative Verschieben zwischen der ersten und der zweiten Reihe (5, 6) vermeiden, und einer Ruheposition, in der sie das relative Verschieben zwischen der ersten und der zweiten Reihe (5, 6) erlauben, auslegbar sind.

3. Dosiervorrichtung (1) nach Anspruch 2, wobei die erste und die zweite Reihe (5, 6) jeweils in einem Stück gefertigt sind und die Stoppmittel (8) ein Verriegelungselement (11) umfassen, das in entsprechende Aufnahmen, die auf der ersten und der zweiten Reihe (5, 6) ausgebildet sind, eingreifbar ist.

4. Dosiervorrichtung (1) nach Anspruch 3, wobei es sich bei den Aufnahmen (12) um Löcher handelt und die zweite Reihe (6) von Zähnen (4) eine Vielzahl von Löchern (12) aufweist, sodass eine Vielzahl von diskreten gegenseitigen Positionen definiert wird, die die erste und die zweite Reihe (5, 6) einnehmen können.

5. Dosiervorrichtung (1) nach einem der vorhergehenden Ansprüche, wobei in einer gegenseitigen Zwischenposition zwischen der ersten und der zweiten Grenzposition mindestens ein Teil der Zähne (4) der ersten Reihe (5) im Wesentlichen einen Teil der Zähne (4) der zweiten Reihe (6) überlappt.

6. Dosiervorrichtung (1) nach einem der vorhergehenden Ansprüche, umfassend eine Scheibe (7), die sich rund um eine Rotationsachse dreht, wobei die erste und die zweite Reihe (5, 6) mit der Scheibe (7) verbunden sind, sodass sie sich entlang der geschlossenen Bahn bewegen.

7. Dosiervorrichtung (1) nach einem der vorhergehenden Ansprüche, wobei der Verteiler (3) einen Stab (13) umfasst, der sich über dem Förderband (2) parallel zur Querungsrichtung entwickelt, wobei der Stab (13) die erste Reihe (5) von Zähnen (4) stützt.

8. Dosiervorrichtung (1) nach einem der vorhergehenden Ansprüche, umfassend Führungsmittel, auf denen die zweite Reihe (6) verschiebbar zur ersten Reihe (5) montiert ist.

9. Dosiervorrichtung (1) nach einem der vorhergehenden Ansprüche, umfassend eine rotierende Walze (14) zum Dosieren der Inhaltsstoffe, die sich auf dem Förderband (2) befinden, wobei die Walze (14) an einem auslaufseitigen Ende des Förderbands (2) angeordnet ist, wobei die Walze (14) höhenverstellbar ist, sodass ihr Abstand zum Förderband (2) variiert wird.

10. Dosiervorrichtung (1) nach einem der vorhergehenden Ansprüche, wobei die Querungsrichtung des Bands (2) im Wesentlichen im rechten Winkel zu einer Förderrichtung verläuft und die erste und die zweite Reihe (5, 6) eine Ausdehnung je nach der Breite des Bands (2) aufweisen.

11. Dosiervorrichtung (1) nach Anspruch 10, wobei die zweite Reihe (6) in Bezug auf die erste Reihe (5) entlang einer im Wesentlichen parallelen Richtung zur Breite des Bands (2) verschoben wird.

12. Dosiervorrichtung (1) nach einem der vorhergehenden Ansprüche, wobei die zweite Reihe (6) von Zähnen (4) in der zweiten Grenzposition eine Längsausdehnung der ersten Reihe (5) von Zähnen (4) definiert.

13. Produktionsanlage für Lebensmittel, umfassend:
- eine Zuführlinie der Lebensmittel;
- eine Dosiervorrichtung (1) nach einem der Ansprüche 1 bis 12, wobei das Förderband (2) auf der Zuführlinie platziert ist und an seinem Ende das Herabfallen der Inhaltsstoffe auf die Zuführungslinie bewirkt.

## Revendications

1. Appareil de dosage (1) pour doser des ingrédients solides discrets sur des produits alimentaires, comprenant :
- une bande transporteuse (2) des ingrédients destinée à décharger lesdits ingrédients sur les produits alimentaires ;
- un distributeur (3) desdits ingrédients disposé au-dessus de la bande transporteuse (2), ledit distributeur (3) comprenant une première et une deuxième rangée (5, 6) de dents (4) se développant au-dessus de la bande transporteuse (2) parallèlement à une direction de traversée de la bande transporteuse (2) ; lesdites première et deuxième rangées (5, 6) de dents (4) étant mobiles le long d'une trajectoire fermée se rapprochant/s'éloignant de la bande transporteuse (2),
**caractérisé en ce que** la première et la deuxième rangée (5, 6) de dents (4) sont essentiellement parallèles l'une à l'autre et coulissent l'une par rapport à l'autre ;
la deuxième rangée (5) de dents (4) coulisse par rapport à la première rangée (5) de dents (4) entre une première position de limitation, dans laquelle la première et la deuxième rangée (5, 6) se chevauchent au moins partiellement, et une deuxième position de limitation, dans laquelle la première et la deuxième rangée (5, 6) sont au moins partiellement placées côte à côte le long de ladite direction de traversée de la bande transporteuse (2).

2. Appareil de dosage (1) selon la revendication 1, comprenant des moyens d'arrêt (8) configurables au moins dans une position de mise en prise, dans laquelle ils empêchent le coulissement relatif entre la première et la deuxième rangée (5, 6), et une position de repos, dans laquelle ils permettent le coulissement relatif entre la première et la deuxième rangée (5, 6).

3. Appareil de dosage (1) selon la revendication 2, dans lequel la première et la deuxième rangée (5, 6) sont chacune fabriquées en une seule pièce, lesdits moyens d'arrêt (8) comprenant un élément de verrouillage (11) pouvant se mettre en prise avec des logements correspondants réalisés sur la première et la deuxième rangée (5, 6).

4. Appareil de dosage (1) selon la revendication 3, dans lequel lesdits logements (12) sont des trous, ladite deuxième rangée (6) de dents (4) comportant une pluralité de trous (12) de manière à définir une pluralité de positions discrètes réciproques que la première et la deuxième rangée (5, 6) peuvent prendre.

5. Appareil de dosage (1) selon l'une quelconque des revendications précédentes, dans lequel, dans une position réciproque intermédiaire entre la première et la deuxième position de limitation, au moins une partie des dents (4) de la première rangée (5) est essentiellement superposée à une partie des dents (4) de la deuxième rangée (6).

6. Appareil de dosage (1) selon l'une quelconque des revendications précédentes, comprenant un disque (7) tournant autour d'un axe de rotation, les première et deuxième rangées (5, 6) étant reliées au disque (7) de manière à se déplacer le long de ladite trajectoire fermée.

7. Appareil de dosage (1) selon l'une quelconque des revendications précédentes, dans lequel ledit distributeur (3) comprend une tige (13) se développant au-dessus de la bande transporteuse (2) parallèlement à ladite direction de traversée, ladite tige (13) supportant la première rangée (5) de dents (4).

8. Appareil de dosage (1) selon l'une quelconque des revendications précédentes, comprenant des moyens de guidage sur lesquels la deuxième rangée (6) est montée de façon coulissante par rapport à la première rangée (5) .

9. Appareil de dosage (1) selon l'une quelconque des revendications précédentes, comprenant un rouleau rotatif (14) pour doser les ingrédients qui se trouvent sur ladite bande transporteuse (2) ; ledit rouleau (14) étant disposé à une extrémité en aval de la bande transporteuse (2), ledit rouleau (14) étant réglable en hauteur de manière à faire varier sa distance par rapport à la bande transporteuse (2).

10. Appareil de dosage (1) selon l'une quelconque des revendications précédentes, dans lequel la direction de traversée de la bande (2) est essentiellement orthogonale à une direction de transport ; les première et deuxième rangées (5, 6) ayant une extension selon la largeur de la bande (2).

11. Appareil de dosage (1) selon la revendication 10, dans lequel la deuxième rangée (6) coulisse par rapport à la première rangée (5) le long d'une direction essentiellement parallèle à la largeur de la bande (2).

12. Appareil de dosage (1) selon l'une quelconque des revendications précédentes, dans lequel, dans la deuxième position de limitation, la deuxième rangée (6) de dents (4) définit une extension longitudinale de la première rangée (5) de dents (4).

13. Installation de production de produits alimentaires, comprenant :
- une ligne d'alimentation des produits alimentaires ;
- un appareil de dosage (1) selon l'une quelconque des revendications 1 à 12, ladite bande transporteuse (2) se trouvant au-dessus de la ligne d'alimentation et, à son extrémité, déterminant la chute des ingrédients sur ladite ligne d'alimentation.
